# EUROPÄISCHE PATENTSCHRIFT

(11) **EP 1 219 161 B1**
(45) Veröffentlichungstag und Bekanntmachung des Hinweises auf die Patenterteilung: **20.04.2005**
(21) Anmeldenummer: 01129909.6
(22) Anmeldetag: 15.12.2001
(51) Int. Cl.: A01F 12/18

(54) **Drescheinrichtung mit oberschlächtig wirkender Fördertrommel**
Threshing device with overshot-conveyor drum
Dispositif batteur à overshot-tambour d'acheminement

(30) Priorität: 22.12.2000 DE 10064473
(43) Veröffentlichungstag der Anmeldung: 03.07.2002
(73) Patentinhaber: DEERE & COMPANY, Moline, Illinois 61265-8098 (US)
(72) Erfinder: Büermann, Martin Dr., 89437 Haunsheim (DE)
(74) Vertreter: Holst, Sönke, Dr.

(56) Entgegenhaltungen:
- EP-A- 0 057 283
- DE-A- 3 310 449
- DE-B- 1 004 843
- DE-B- 1 122 756
- DE-B- 1 190 237
- DE-B- 1 191 160
- DE-C- 740 702
- DE-C- 941 823
- US-A- 4 700 717

## Beschreibung

Die Erfindung betrifft eine Drescheinrichtung, mit einer Dreschtrommel, die mit einem Dreschkorb zusammenwirkt, einer stromab der Dreschtrommel angeordneten, oberschlächtig wirkenden Fördertrommel, oberhalb der eine Abdeckung angeordnet ist, und stromab der eine Abscheidetrommel angeordnet ist, die mit einem Abscheidekorb zusammenwirkt.

Die DE 740 702 A offenbart eine Dreschmaschine mit zwei in Gutflussrichtung aufeinander folgenden Dreschtrommeln. Die zweite Dreschtrommel arbeitet oberschlächtig und ist teilweise von einem festen Abscheidekorb umgeben.

In dem Buch "Grain and Forage Harvesting", Proceedings First International Grain and Forage Conference, ASAE, 1978, ist auf der Seite 155 ein Längsschnitt durch einen Mähdrescher des russischen Fabrikats Kolos wiedergegeben. Dieser Mähdrescher weist eine Dreschtrommel auf, die das Gut einer oberschlächtig fördernden Fördertrommel aufgibt, welche es einer Abscheidetrommel zuführt. Oberhalb der Fördertrommel befindet sich ein festes Abdeckblech. Die Abscheidetrommel führt das Gut unter Verwendung einer unterschlächtig arbeitenden Leittrommel den Strohschüttlern zu.

In dem Artikel "Systematik der Dreschorgane" von Ludwig Caspers (Grundl. Landtechnik Bd. 19, 1969, S. 9-17) ist ein 1960 vorgestelltes Dreschwerk von Garmas wiedergegeben. Dieses Dreschwerk arbeitet auch mit einer ersten Dreschtrommel, die das Gut gegen eine gewölbte Fläche wirft, von der aus es mittels einer oberschlächtig fördernden kleinen Fördertrommel einer Abscheidetrommel zugeführt wird. Die Fördertrommel ist somit im unteren Bereich eines relativ großen, von der gewölbten Fläche begrenzten Hohlraums angeordnet.

In der DE 42 09 020 A ist ein Mähdrescher gezeigt, bei dem das Gut zwischen einer Dresch- und einer Abscheidetrommel durch oberschlächtig arbeitende Fördertrommeln gefördert wird. Eine Abdeckung oberhalb der Fördertrommeln ist durch die Unterseite des in relativ großem Abstand darüber angeordneten Korntanks und durch das ebenfalls relativ weit darüber angeordnete Bodenblech des Motorraums gegeben.

In der DE 1 191 160 B folgt einer Dreschtrommel eine oberschlächtig arbeitende Strohfördertrommel, die das Gut auf Schüttler auswirft. Der stromab liegende Sektor der Strohfördertrommel ist von einem Mantelteil umgeben, der in seiner Lage gegenüber der Strohfördertrommel verstell- und arretierbar ist.

Die DE 41 16 776 beschreibt einen am Auslauf eines Dreschkorbs angeordneten Korb, der aus Stäben aufgebaut ist, die aus federndem Rundstahl bestehen. Oberhalb des Korbs ist eine Wendetrommel angeordnet.

Die aus der DE 42 09 020 A, dem Kolos und von Garmas bekannten, zwischen einer Dresch- und einer Abscheidetrommel angeordneten, oberschlächtig arbeitenden Fördertrommeln haben den Vorteil, dass beim Gutübergang von der Dreschtrommel auf die Abscheidetrommel keine abrupten Richtungswechsel des Dreschguts stattfinden, wie sie bei anderen Mehrtrommeldreschwerken (sh. DE 196 53 399 A) anzutreffen sind, bei denen zwischen der Tangentialdreschtrommel und den Schüttlern zusätzliche, von Körben umschlossene Abscheidetrommeln eingefügt sind, um die Abscheidung speziell unter feuchten Erntebedingungen zu verbessern, und bei denen häufig eine Umlenkung unter scharfen Winkeln erfolgt. Der Nachteil der scharfen Umlenkung liegt darin, dass sie speziell unter trockenen Verhältnissen aufgrund stärkerer Strohzerstörung zu einer verschlechterten Abscheidung durch die Schüttler und auch zu einer höheren Reinigungsbelastung durch Kurzstroh führt, was die Leistung des Mähdreschers ebenfalls herabsetzt.

Problematisch ist bei den oberschlächtig arbeitenden, zwischen einer Dresch- und einer Abscheidetrommel angeordneten Fördertrommeln allerdings die Wahl des Abstands zwischen der sie nach oben hin umschließenden Abdeckung und der Fördertrommel. Wird der Abstand groß gewählt, wie bei Garmas oder in der DE 42 09 020 A, kommt es zu einer Expansion der Strohmatte und somit zu einer Vermischung der Körner, die beim Austritt aus der Dreschtrommel durch die Strohmatte zum Korbgrund hin durchgedrungen sind und sich an der Unterseite des Gutflusses befinden, und des Strohs, so dass die Dreschwirkung der Abscheidetrommel zumindest in ihrem Eingangsbereich nicht zufriedenstellend ist. Wird der Abstand zu klein gewählt, kann bei größeren Durchsätzen ein unerwünschter Stau entstehen.

Die der Erfindung zugrunde liegende Aufgabe wird darin gesehen, ein Mehrtrommeldreschwerk dahingehend zu verbessern, dass unabhängig vom jeweiligen Gutdurchsatz eine optimale Abscheidung der Körner gewährleistet ist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt vor, die Abdeckung beweglich anzuordnen und mit einer entgegen der Bewegungsrichtung der Abdeckung wirkenden Kraft oder einem Drehmoment vorzuspannen, so dass die Abdeckung gegen die Kraft bzw. das Drehmoment bewegbar ist. Die Abdeckung kann in relativ geringem Abstand von der Fördertrommel angeordnet sein, so dass keine unerwünschte Expansion der Strohmatte stattfindet. Bei relativ großen Gutdurchsätzen weicht die Abdeckung gegen den Druck der Gutmatte aus, der die Kraft bzw. das Drehmoment überwindet. Daher ist auch dann kein Stau zu befürchten.

Auf diese Weise erhält man eine Drescheinrichtung, bei der sowohl bei kleinen als auch bei großen Gutdurchsätzen stets eine gute Abscheidewirkung insbesondere der Abscheidetrommel erzielt wird.

Die Kraft bzw. das Drehmoment, mit der die Abdeckung beaufschlagt wird, und gegen die sie bewegbar ist, wird vorzugsweise durch eine Feder erzeugt. Denkbar ist aber auch, ein Gewicht zu verwenden.

Grundsätzlich könnte man die Abdeckung verschiebbar befestigen, so dass sie bei größeren Gutdurchsätzen eine Linearbewegung durchführt. Aus konstruktiven Gründen ist aber bevorzugt, sie um eine quer zur Gutflussrichtung verlaufende Achse verschwenkbar zu gestalten. Die Achse ist vorzugsweise am eingangsseitigen Ende der Abdeckung angeordnet, d. h. der Dreschtrommel benachbart. Die Feder greift dann am gegenüberliegenden, der Abscheidetrommel benachbarten Ende der Abdeckung an und spannt die Abdeckung mit einem Drehmoment vor.

Die Bewegung der Abdeckung kann durch einen ersten, unteren Anschlag begrenzt werden, der die Ruheposition der Abdeckung bei fehlendem Gutfluss definiert. Somit ist auch dann, wenn kein oder nur wenig Gut verarbeitet wird, ein Abstand zwischen der Abdeckung und der Fördertrommel vorhanden. Weiterhin kann ein zweiter Anschlag vorgesehen sein, der den maximalen Ausweichweg der Abdeckung definiert.

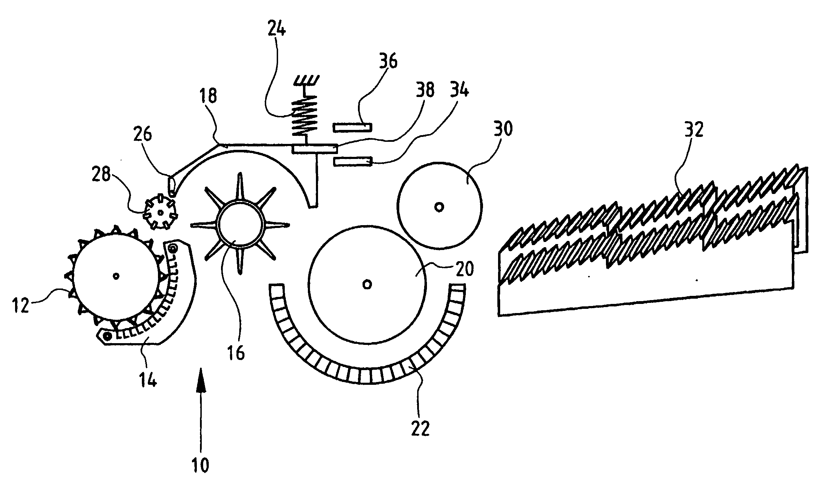

In der Zeichnung ist ein nachfolgend näher beschriebenes Ausführungsbeispiel der Erfindung dargestellt. Sie zeigt eine erfindungsgemäße Drescheinrichtung.

Die Drescheinrichtung 10 ist ein Mehrtrommeldreschwerk, bei dem das in der Regel von einem Schrägförderer bereitgestellte, von einem Schneidwerk oder dgl. geerntete Gut zunächst von einer Dreschtrommel 12 bearbeitet wird, die mit einem Dreschkorb 14 zusammenwirkt. Beim Austritt aus dem Dreschspalt der Dreschtrommel 12 wird das Gut von einer Fördertrommel 16 mit nach außen überstehenden Mitnehmern angenommen. Zur besseren Gutabnahme von der Dreschtrommel 12 wird eine Abstreiftrommel 28 verwendet. Die Fördertrommel 16 leitet das Gut oberschlächtig zu einer Abscheidetrommel 20, die mit einem Abscheidekorb 22 zusammenwirkt, der letztere um etwa 180° umschließt. Die Fördertrommel 16 ist nicht als Abscheideelement ausgebildet, sondern nur als Förderelement.

Die Fördertrommel 16 wirkt mit einer konkav gewölbten Abdeckung 18 in Form eines Leitblechs zusammen, das mit der Kraft einer die Abdeckung 18 nach unten drückenden Feder 24 belastet ist. Die Abdeckung 18 ist um eine horizontale, quer zur Gutflussrichtung verlaufende Achse 26 schwenkbar, die der Dreschtrommel 12 zugewandt ist. An dem der Abscheidetrommel 20 benachbarten Ende der Abdeckung 18 greift die Feder 24 an, die die Abdeckung 18 mit einem sie im Uhrzeigersinn nach unten drückenden Drehmoment beaufschlagt. Die Feder 24 drückt ein überstehendes Element 38 der Abdeckung 18 gegen einen unteren, ortsfesten Anschlag 34. Der untere Anschlag 34 definiert somit die Ruhestellung der Abdeckung 18. Bei größeren Gutdurchsätzen weicht die Abdeckung 18 gegen das von der Feder 24 erzeugte Drehmoment im Gegenuhrzeigersinn nach oben aus, bis das überstehende Element 38 an einen oberen Anschlag 36 stößt. Ein Gutstau ist also auch bei größeren Durchsätzen nicht zu befürchten.

Die Abdeckung 18 sorgt dafür, dass die Gutmatte möglichst nicht expandieren kann, so dass nur wenige Körner ihre Position in der Gutmatte verändern, um nicht - nachdem sich die Körner augrund der Wirkung der Dreschtrommel 12 an der Unterseite der Gutmatte befinden - den negativen Effekt einer erneuten Durchdringung der Gutmatte zu erhalten, der die Abscheidung in der Abscheidetrommel 20 verschlechtert. Das Gut wird hierbei schonend in einem runden Verlauf an die nachgeschaltete Abscheidetrommel 20 übergeben. Die Fördertrommel 16 weist einen relativ kleinen Durchmesser auf, um die Verweilzeit in dem Zwischenraum zwischen der Fördertrommel 16 und der Abdeckung 18 gebildeten Spalt zu verringern.

Durch die dargestellte Anordnung kann die Abscheidetrommel 20 von oben her beschickt werden. Hierdurch ist ein Korbumschlingungswinkel von 180° möglich, was sehr große Abscheideflächen mit hohem Leistungszuwachs ermöglicht. Gleichzeitig wird ein kompakter platzsparender Aufbau erreicht.

Hinter der Abscheidetrommel 20 folgt eine Wendetrommel 30, die die Gutmatte auf Schüttler 32 leitet. Alternativ könnte das Gut von der Abscheidetrommel 20 einem Trennrotor oder mehreren Trennrotoren zugeführt werden. Ebenso ist ein Abscheidekorb 22 denkbar, der einen geringeren Umschlingungswinkel aufweist und das Gut direkt auf die Schüttler oder Rotoren leitet.

In weiteren Ausbildungen ist es vorteilhaft, wenn der Abscheidekorb 22 mit einem Gelenk versehen ist und aufgeklappt werden kann, um den Spalt zu vergrößern und eine noch geringere Strohzerstörung zu erreichen. Ebenso ist es denkbar, den Abscheidekorb 22 vertikal zu verschieben, um den Spalt zu vergrößern. Auch eine vertikale Verschiebung der Abscheidetrommel 20 kann eine Vergrößerung des Spalts bewirken. Der Abscheidekorb 22, der gewöhnlich wie ein Dreschkorb mit Leisten und Drähten versehen ist, kann auch als glatter Lochblechkorb ausgebildet sein. Ebenso können Fingerrechen verwendet werden, wie sie an Trennrotoren verwendet werden, die ebenfalls eine schonende Behandlung des Strohs bewirken. Diese Fingerrechen können auch schwenkbar am Abscheidekorb 22 befestigt sein, so dass die Oberfläche des Abscheidekorbs 22 je nach Wunsch glatt ist, oder, wenn die Fingerrechen nach unten geschwenkt werden, sich Kanten ergeben, die wie Korbleisten wirken.

## Patentansprüche

1. Drescheinrichtung (10), mit einer Dreschtrommel (12), die mit einem Dreschkorb (16) zusammenwirkt, einer stromab der Dreschtrommel (14) angeordneten, oberschlächtig wirkenden Fördertrommel (16), oberhalb der eine Abdeckung (18) angeordnet ist, und stromab der eine Abscheidetrommel (20) angeordnet ist, die mit einem Abscheidekorb (22) zusammenwirkt, **dadurch gekennzeichnet, dass** die Abdeckung (18) beweglich angeordnet und vorgespannt ist.

2. Drescheinrichtung (10) nach Anspruch 1, **dadurch gekennzeichnet, dass** die Abdeckung (18) mit einer Feder (24) verbunden ist.

3. Drescheinrichtung (18) nach Anspruch 1 oder 2, **dadurch gekennzeichnet, dass** die Abdeckung (18) um eine quer zur Gutflussrichtung verlaufende Achse (26) schwenkbar ist.

4. Drescheinrichtung (18) nach Anspruch 3, **dadurch gekennzeichnet, dass** die Achse (26) der Dreschtrommel (12) benachbart ist.

5. Drescheinrichtung (18) nach Anspruch 3 oder 4, **dadurch gekennzeichnet, dass** die Feder (24) an dem von der Achse (26) beabstandeten Ende der Abdeckung (18) angreift.

6. Drescheinrichtung (18) nach einem der vorhergehenden Ansprüche, **gekennzeichnet durch** einen unteren Anschlag (34) und/oder einen oberen Anschlag (36), der oder die den Bewegungsbereich der Abdeckung (18) begrenzt oder begrenzen.

## Claims

1. A threshing device (10) with a threshing drum (12) which cooperates with a threshing concave (14), an overshot conveyor drum (16) arranged downstream of the threshing drum (12) and above which is arranged a cover (18) and downstream of which is arranged a separator drum (20) which cooperates with a separator concave (22), **characterized in that** the cover (18) is movably arranged and under bias.

2. A threshing device (10) according to claim 1, **characterized in that** the cover (18) is connected to a spring (24).

3. A threshing device (10) according to claim 1 or 2, **characterized in that** the cover (18) can pivot about an axis (26) running transverse to the crop flow direction.

4. A threshing device (10) according to claim 3, **characterized in that** the axis (26) is adjacent the threshing drum (12).

5. A threshing device (10) according to claim 3 or 4, **characterized in that** the spring (24) engages the end of the cover (18) spaced from the axis (26).

6. A threshing device (10) according to any of the preceding claims, **characterized by** a lower stop (34) and/or an upper stop (36) which limits or limit the range of movement of the cover (18).

## Revendications

1. Dispositif batteur (10) avec un tambour de battage (12) qui coopère avec un panier de battage (14), un tambour d'acheminement (16) disposé en aval du tambour de battage (12) et opérant en overshot, au-dessus duquel est disposé un couvercle (18), et en aval duquel est disposé un tambour de séparation (20) qui coopère avec un panier de séparation (22), **caractérisé en ce que** le couvercle (18) est monté et précontraint en position mobile.

2. Dispositif batteur (10) selon la revendication 1, **caractérisé en ce que** le couvercle (18) est attaché avec un ressort (24).

3. Dispositif batteur (10) selon la revendication 1 ou 2, **caractérisé en ce que** le couvercle (18) est pivotant autour d'un axe (26) placé transversalement à la direction d'écoulement des matières.

4. Dispositif batteur (10) selon la revendication 3, **caractérisé en ce que** l'axe (26) est proche du tambour de battage (12).

5. Dispositif batteur (10) selon la revendication 3 ou 4, **caractérisé en ce que** le ressort (24) est accroché à l'extrémité du couvercle (18) éloignée de l'axe (26).

6. Dispositif batteur (10) selon l'une quelconque des revendications précédentes, **caractérisé par** une butée inférieure (34) et/ou une butée supérieure (36), qui limite ou limitent la zone de déplacement du couvercle (18).
